# EUROPÄISCHE PATENTANMELDUNG

(11) **EP 1 198 988 A1**
(43) Veröffentlichungstag der Anmeldung: **24.04.2002**
(21) Anmeldenummer: 00122810.5
(22) Anmeldetag: 19.10.2000
(51) Int. Cl.: A01M 1/14, A01M 1/02

(54) **Insektenfalle**

(71) Anmelder: Ledin, Ali, 85053 Ingolstadt/Niederfeld (DE)
(72) Erfinder: Ledin, Ali, 85053 Ingolstadt/Niederfeld (DE)
(74) Vertreter: Liebl, Thomas

(57) **Zusammenfassung**

Die Erfindung betrifft eine Insektenfalle bestehend aus einer Trägerfolie (3), einer Aktivbeschichtung und einem Haltemittel. Erfindungsgemäß ist das Haltemittel eine Haltefolie (6), die mit der Trägerfolie (3) zu einer Verbundfolie (8) verbunden ist. Die Haltefolie (6) besteht aus einem weichen Kunststoffmaterial vorzugsweise in der Art einer PVC-Folie. Die Trägerfolie besteht demgegenüber aus einem relativ steiferen Kunststoffmaterial und ist vorzugsweise als Polyesterfolie ausgebildet. Damit wird vorteilhaft eine einfache Halterung über den Luftdruck lediglich durch Andrücken der Haltefolie (6) an eine glatte Installationsfläche (2) möglich. Zudem wird vorteilhaft eine chemische Entkopplung zwischen der weichen Haltefolie (6) mit ihrem hohen Weichmacheranteil und der Aktivbeschichtung (4) durch die dazwischenliegende Trägerfolie (3) erreicht, deren Formstabilität zudem zu einer guten Beschichtbarkeit, Herstellung und zu einer bequemen Handhabung führt.

## Beschreibung

Die Erfindung betrifft eine Insektenfalle nach dem Oberbegriff des Anspruchs 1.

Eine bekannte gattungsgemäße Insektenfalle (EP 0281 562 B1) besteht aus einer Trägerfolie aus Kunststoff, einer Aktivbeschichtung und einem Haltemittel. Dabei ist die Aktivbeschichtung auf einer Flächenseite der Trägerfolie als Aktivseite angebracht. Die Aktivbeschichtung besteht aus einem insektenhaltenden Klebstoff. Es sind jedoch auch Ausführungsformen bekannt, bei denen die Aktivbeschichtung zusätzlich Anlocksubstanzen und/oder Insektizide umfasst. Das Haltemittel ist auf der der Aktivseite gegenüberliegenden Flächenseite der Trägerfolie als Halteseite angebracht und dient zur Befestigung der Insektenfalle insbesondere auf der glatten Installationsfläche einer Fensterscheibe.

Konkret besteht hier die Trägerfolie aus einem relativ steifen Kunststoffstreifen, der auf der Aktivseite insgesamt mit einer insektenhaltenden Klebstoffbeschichtung ausgerüstet ist. Der Kunststoffstreifen ist transparent ausgeführt und die Klebstoffbeschichtung ist für den Transport durch eine abziehbare Schutzfolie abgedeckt. An der Unterkante ist der Kunststoffstreifen zu einer Auffangrinne abgekantet, in der insbesondere bei hohen Temperaturen dünnflüssig werdender und nach unten ablaufender Klebstoff auffangbar ist.

Das Haltemittel ist hier konkret ein im oberen Bereich auf der Halteseite angebrachter schmaler Klebstoffstreifen, der mit einem vor der Installation abziehbaren Schutzfolienstreifen abgedeckt ist.

Nachteilig an dieser bekannten Insektenfalle ist die Befestigung, da als Haltemittel ein Klebstoffstreifen erforderlich ist. Die Aufbringung des Klebstoffstreifens auf der Rückseite gegenüberliegend zur insektenhaltenden Klebstoffschicht ist relativ aufwendig. Bei der Befestigung mittels des Klebstoffstreifens verschmutzt regelmäßig die Installationsfläche, wobei nach dem Entfernen der Insektenfalle anhaftende Klebstoffreste sichtbar sind. Dies fällt besonders unangenehm auf, wenn die Insektenfalle an einer Fensterscheibe angebracht wurde und nach der Abnahme der Insektenfalle die klare Durchsicht gestört ist. Da eine solche Insektenfalle für lange Zeit, im Idealfall für eine ganze Sommersaison verwendbar sein soll, muss diese beispielsweise für eine Fensterscheibenreinigung zwischendurch auch abgenommen werden. Dabei ist hier die Wiederverwendbarkeit eingeschränkt, da insbesondere durch das Aushärten des Klebstoffs bei UV-Einstrahlung oder durch Staub die Haftfähigkeit und Wiederinstallation nicht mehr gegeben sein kann.

Weiter ist eine Insektenfalle allgemein bekannt, die aus einem sehr weichen Kunststofffolienabschnitt mit geringer Steifigkeit besteht, auf den einseitig eine Insektizide enthaltende Aktivbeschichtung aufgebracht ist. Der Folienabschnitt wird für eine Installation lediglich an einer glatten Installationsoberfläche angelegt und flächig durch Ausstreichen angepresst. Dadurch wird Luft zwischen den Anlageflächen des Folienabschnitts und der Installationsfläche verdrängt, so dass der Folienabschnitt durch den dann einseitig darauf wirkenden Luftdruck angepresst und gehalten wird. Ein zusätzliches Haltemittel ist somit hier nicht erforderlich.

Nachteilig an dieser bekannten Insektenfalle ist die aufwendige Herstellung in Verbindung mit einer unbequemen Handhabung bei der Anbringung. Eine hier verwendbare Folie ist eine PVC-Folie mit einem hohen Weichmacheranteil. Grundsätzlich können auch andere weiche Folientypen verwendet werden. Da solche weichen Folien praktisch keine Formstabilität aufweisen, ist die Aufbringung der Aktivbeschichtung mit bekannten Verfahren schwierig oder nicht durchführbar. Insbesondere ist die Aufbringung einer insektenhaftenden Klebstoffschicht, die relativ hohe Temperaturen erfordert, mit üblichen Maschinen nicht durchführbar, so dass derzeit auf dem Markt nur Aktivbeschichtungen ohne Klebstoff angeboten werden. Insbesondere ergibt sich auch eine negative Beeinflussung sowohl der Aktivbeschichtung durch das Folienmaterial als auch umgekehrt eine negative Beeinflussung des Folienmaterials durch die Aktivbeschichtung. Beispielsweise verändern in eine Klebeschicht auswandernde Weichmacher der Kunststofffolie negativ die Konsistenz des Klebstoffs und dessen Klebeigenschaft ebenso wie die Funktion von Insektiziden. Andererseits führt die aufgebrachte Aktivbeschichtung regelmäßig dazu, dass sich entweder bereits beim Beschichtungsprozess oder im Laufe der Zeit die Folie verformt und wellt. Dadurch ist einerseits die Optik gestört und andererseits gelangt dadurch bei einer installierten Insektenfalle Luft zwischen die Folienrückseite und die glatte Installationsoberfläche, so dass die Haftfähigkeit und auch eine Wiederverwendbarkeit nicht mehr gegeben sind.

Aufgabe der Erfindung ist es, eine gattungsgemäße Insektenfalle so weiterzubilden, dass bei guter Funktion und einfacher Herstellbarkeit eine gute und saubere Handhabung möglich ist.

Diese Aufgabe wird mit den Merkmalen des Anspruchs 1 gelöst.

Gemäß Anspruch 1 ist das Haltemittel eine Haltefolie, die mit der Trägerfolie zu einer Verbundfolie verbunden ist. Die Haltefolie besteht aus einem weichen Kunststoffmaterial mit geringer Steifigkeit und die Trägerfolie besteht aus einem demgegenüber relativ steiferen Kunststoffmaterial. Die Anordnung und Dimensionierung ist so getroffen, dass die Verbundfolie mit ihrer Halteseite an der glatten Installationsfläche zur Anlage bringbar und flächig andrückbar ist, beispielsweise indem mit der flachen Hand darüber gestrichen wird. Dabei wird die Luft zwischen der Installationsfläche und der weichen Haltefolie verdrängt und die Insektenfalle wird insgesamt durch den auf der freien Trägerfolienseite anliegenden Luftdruck an der Installationsfläche gehalten. Weitere Haltemittel sind nicht erforderlich. Dabei soll sich die weiche Haltefolie so innig und dicht an die Installationsoberfläche flächig anlegen, dass auch über lange Zeit keine die Halterung aufhebende Luft zwischen die Haltefolie und die Installationsoberfläche gelangen kann. Die Verbundfolie ist jedoch von Hand von der Installationsoberfläche zur Lösung der Halterung abziehbar.

Damit wird vorteilhaft eine chemische Entkopplung zwischen der weichen Haltefolie mit den darin enthaltenen Weichmachern und der Aktivbeschichtung mittels der dazwischen liegenden chemisch wesentlich weniger aktiv gestaltbaren relativ steifen Trägerfolie herstellbar. Eine negative Beeinflussung zwischen der Aktivbeschichtung und der Haltefolie ist damit ausschließbar. Vorteilhaft wird zudem durch die weiche Oberfläche der Haltefolie eine dicht anschmiegsame Anlagefläche zur Verfügung gestellt, die gut für eine Halterung über ein Vakuum zwischen dieser Anlagefläche und der Installationsoberfläche geeignet ist. Zudem werden die negativen Eigenschaften einer solchen separaten Haltefolie durch ihre fehlende Formstabilität über die Kombination und Verbindung mit der relativ steiferen Trägerfolie vermieden. Die Aktivbeschichtung wird auf die steifere Trägerfolie aufgebracht, wodurch der Beschichtungsvorgang mit üblichen Beschichtungsmaschinen insbesondere auch für eine Klebstoffbeschichtung und erforderlichenfalls bei höheren Temperaturen problemlos durchführbar ist. Durch die von der Trägerfolie ausgehende relative Formstabilität in der Art einer dünnen Platte ist auch die Handhabung bei der Anbringung, insbesondere beim Abziehen von Schutzfolien und der Anlage und dem Anpressen an eine Installationsoberfläche einfach und bequem.

Da für die Halterung kein Klebstoff verwendet wird, kann durch die Anbringung der Insektenfalle eine Installationsoberfläche nicht verschmutzen und eine haftende Wiederverwendung nach einer Abnahme ist stets gewährleistet.

Die Verbundfolie kann grundsätzlich aus mehreren Folienlagen gebildet sein, wobei die Anordnung so zu treffen ist, dass die vorstehend genannte negative Beeinflussung zwischen der Aktivbeschichtung und der weichen Haltefolie ausgeschlossen ist. Bevorzugt wird jedoch gemäß Anspruch 2 lediglich eine zweilagige Verbundfolie aus Trägerfolie und Haltefolie verwendet, wobei sich die Haltefolie über den gesamten Bereich der Trägerfolie erstreckt. Grundsätzlich könnten auch nur Segmente der Trägerfolie mit einer Haltefolie ausgerüstet sein.

Zweckmäßig wird die Verbundfolie gemäß Anspruch 3 großflächig in einer Spritz-Blasform hergestellt, wobei zuerst die Trägerfolie als Schlauch spritzbar ist und in den Schlauch die Haltefolie für eine flächige Anlage und Verbindung eingeblasen wird. Anschließend wird der Schlauch aufgeschnitten und aus der flächigen Verbundfolie werden Verbundfolienstreifen für die Insektenfalle abgeschnitten. Bevorzugt werden rechteckige Folienstreifen verwendet, die je nach den speziellen Gegebenheiten und Einsatzfällen unterschiedlich groß ausgebildet sein können.

Die Verbindung zwischen der Haltefolie und der Trägerfolie kann vollflächig oder zumindest in Teilflächenbereichen durch Verschweißen und/oder Verkleben und/oder über ein Vakuum zwischen den gegenseitigen Anlageflächen ausgeführt sein.

Besonders gut geeignet ist gemäß Anspruch 5 als weiche Haltefolie eine PVC-Folie (Poly-Vinyl-Chlorid-Folie) mit einem hohen Weichmacheranteil. Der Weichmacheranteil soll dabei etwa 30% bis 45%, vorzugsweise 38%, ausmachen. Die relativ steifere Trägerfolie soll eine Polyesterfolie sein, die keine Weichmacher enthält.

Als weiche Haftfolie eignen sich auch PE-Folien (Poly-Ethylen-Folien) oder PP-Folien (Poly-Propylen-Folien) jeweils mit einem hohen Weichmacheranteil.

Gemäß Anspruch 6 sollen die Haltefolie, die Trägerfolie und eine ggf. dazwischenliegende Klebstoffschicht sowie die Aktivbeschichtung transparent sein. Unter Transparenz wird hier auch eine leichte farbliche Abtönung oder Gestaltung mit Aufdrucken verstanden, die insgesamt lichtdurchlässig sind oder wenigstens lichtdurchlässige Bereiche aufweisen. Damit wird eine besonders gute Funktion der Insektenfalle erreicht, wenn diese auf der Innenseite einer Fensterscheibe angebracht ist, da insbesondere fliegende Insekten in Richtung der Fensterscheibe zum Licht streben und damit in Kontakt mit der Aktivbeschichtung kommen. Zudem wird durch die Transparenz die Optik einer installierten Insektenfalle verbessert.

Die Insektenfalle kann nach Anspruch 7 auch für eine Bemalung mit Transparentfarben (window colors) hergerichtet sein, so dass z. B. bei einer installierten Insektenfalle der Eindruck eines durchscheinenden Fensterbildes vermittelt wird.

In an sich bekannter Weise können nach Anspruch 8 für den Transport und für den Verkauf die Aktivbeschichtung und/oder die Haftfläche mit einer an sich bekannten abziehbaren Schutzfolie versehen werden.

Die Verformbarkeit und Formstabilität der Trägerfolie kann zudem für eine Formgestaltung der Insektenfalle verwendet werden. Gemäß Anspruch 1 kann eine an sich bekannte Auffangrinne beispielsweise durch Abkanten und Aufbiegen eines Randflansches gebildet werden, mit der insbesondere bei Temperatureinstrahlung dünnflüssig werdender Klebstoff der Aktivbeschichtung auffangbar ist und damit eine Verschmutzung der Installationsoberfläche vermieden wird.

Zusätzlich oder alternativ dazu kann zur Lösung des selben Problems die Verbundfolie-zumindest in Teilflächenbereichen mit einer Auffangstruktur ausgeführt sein. Eine solche Auffangstruktur kann beispielsweise aus übereinanderliegenden Querrinnen und/oder napfförmigen Einbuchtungen oder noppenförmigen Ausbuchtungen bestehen. Dabei sind sowohl gleichmäßige Muster oder ggf. auch figürliche reliefartige Gestaltungen möglich. Es ist dabei jedoch weiter erforderlich für einen sicheren Halt geeignet große Anlageflächen zwischen der Haltefolie und der Installationsoberfläche zur Verfügung zu stellen.

Anhand einer Zeichnung wird die Erfindung näher erläutert.

Es zeigen:
- Fig. 1: eine schematische Seitenansicht einer installierten Insektenfalle,
- Fig. 2: eine andere Ausführungsform einer Insektenfalle mit noch angebrachten Schutzfolien und
- Fig. 3: eine weitere Ausführungsform einer installierten Insektenfalle mit eingeformter Auffangstruktur in einer Seitenansicht.

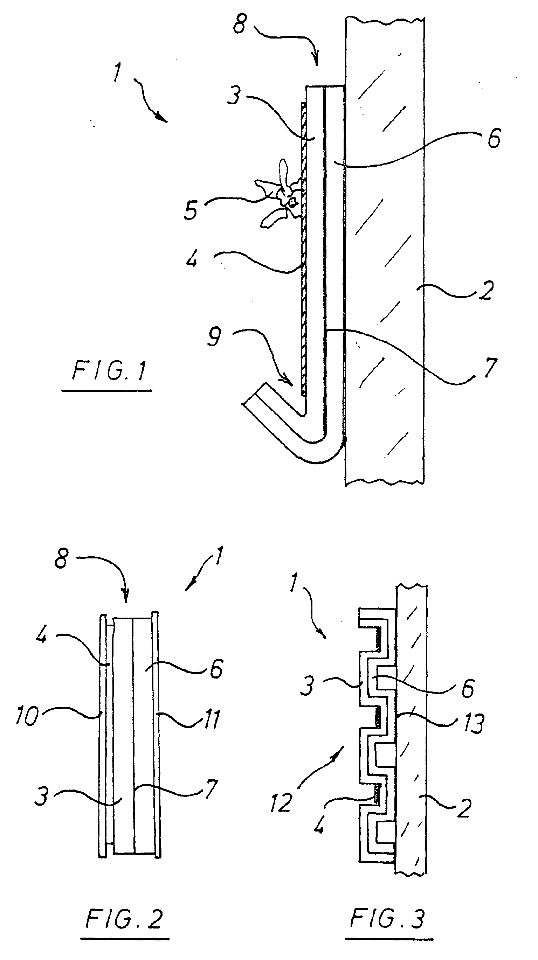

In Fig. 1 ist eine Insektenfalle 1 in einer Seitenansicht gezeigt, die an einer Fensterscheibe 2 befestigt ist. In der schematischen Darstellung sind aus Gründen der besseren Übersichtlichkeit insbesondere die Folienschichtdicken gegenüber den tatsächlichen Abmessungen vergrößert dargestellt.

Die Insektenfalle besteht aus einer Trägerfolie 3 in der Art einer PVC-Folie ohne Weichmacher. Auf der zugänglichen Aktivseite der Trägerfolie 3 ist eine Aktivbeschichtung durch einen insektenhaftenden Klebstoff flächig angebracht.

Eine haftende Fliege 5 ist schematisch angedeutet. Der Aktivbeschichtung gegenüberliegend ist eine Haltefolie 6 angebracht, die mit der Trägerfolie 3 mittels einer Kleberschicht 7 zu einer Verbundfolie 8 verbunden ist. Die Trägerfolie 3 und die Verbundfolie 8 könnten auch durch Verschweißen miteinander verbunden sein.

Am unteren Kantenbereich ist die Verbundfolie 8 zu einer Auffangrinne 9 abgekantet.

In Fig. 2 ist in einer Seitenansicht eine ähnliche Insektenfalle mit dem gleichen Aufbau jedoch ohne Auffangrinne im noch nicht installierten Zustand dargestellt. Dabei sind die Aktivbeschichtung 4 und die Haltefolie 6 jeweils durch eine abziehbare Schutzfolie 10, 11 abgedeckt.

Zur Installation der Insektenfalle 1 wird eine ggf. vorhandene Schutzfolie 11 abgezogen und die Haftfolie 6 an die glatte Installationsoberfläche der Fensterscheibe 2 angelegt und angedrückt, dadurch wird die Luft zwischen den Anlageflächen entfernt und die Insektenfalle ist durch den darauf liegenden Luftdruck gehalten. Die weiche Haltefolie liegt so innig und dicht an, dass über sehr lange Zeit keine Luft eindringen kann und die Halterung aufrechterhalten wird. Anschließend wird die Schutzfolie 10 von der Aktivbeschichtung abgezogen, wodurch die Insektenfalle funktionsfähig ist. Bei sehr starker Sonneneinstrahlung und hohen Temperaturen kann möglicherweise der Klebstoff der Aktivbeschichtung 4 so dünnflüssig werden, dass die Gefahr besteht, dass Teile davon nach unten abfließen. Für diesen Fall ist die Auffangrinne 9 als Schutz gegen eine Verschmutzung der Fensterfläche vorgesehen. Bei Verwendung eines Klebstoffs mit geringeren Fließeigenschaften ist ggf. eine Auffangrinne entbehrlich.

In Fig. 3 ist eine alternative Ausführungsform einer Insektenfalle dargestellt, die jedoch denselben Verbundfolienaufbau aus einer Trägerfolie 3 und einer relativ weichen und damit verbundenen Haltefolie 6 wie die Ausführungsformen der Fig. 1 und Fig. 2 aufweist. Beispielhaft sind unter Ausnützung der Formstabilität der Trägerschicht 3 hier querverlaufende Rillen als Auffangstruktur 12 bzw. Haltestruktur für eine vorzugsweise am Boden der Rillen angebrachte Aktivbeschichtung 4 eingeformt. Die Aktivbeschichtung kann insbesondere aus einem Klebstoff bestehen, wobei die Auffangstruktur den Kleber gegen ein Wegfließen zurückhalten kann. Die Insektenfalle 1 ist auch hier unter Ausnutzung des Luftdrucks an Anlageflächen 13 an der Fensterscheibe 2 gehalten.

## Patentansprüche

1. Insektenfalle bestehend aus einer Trägerfolie (3) aus Kunststoff, einer Aktivbeschichtung (4) und einem Haltemittel, wobei
die Aktivbeschichtung (4) auf einer Flächenseite der Trägerfolie (3) als Aktivseite zumindest auf Flächenteilbereichen angebracht ist und aus einem insektenhaltenden Klebstoff und/oder aus Anlocksubstanzen und/oder Insektiziden besteht, und
das Haltemittel auf der der Aktivseite gegenüberliegenden Flächenseite der Trägerfolie (3) als Halteseite zumindest auf Flächenteilbereichen angebracht ist und das Haltemittel zur Befestigung der Insektenfalle auf glatten Installationsflächen (2) ausgebildet ist,
**dadurch gekennzeichnet,**
**dass** das Haltemittel eine Haltefolie (6) ist, die mit der Trägerfolie (3) zu einer Verbundfolie (8) verbunden ist,
**dass** die Haltefolie (6) aus einem weichen Kunststoffmaterial mit geringer Steifigkeit und die Trägerfolie (3) aus einem demgegenüber relativ steiferen Kunststoffmaterial besteht, dergestalt,
**dass** die Verbundfolie (8) mit ihrer Halteseite an der glatten Installationsfläche (2) zur Anlage bringbar und flächig andrückbar ist, wobei die Luft zwischen der Installationsfläche (2) und der weichen Haltefolie (6) verdrängbar ist und die Insektenfalle (1) durch den auf der freien Trägerfolienseite anliegenden Luftdruck an der Installationsfläche (2) gehalten wird, und
**dass** sich die weiche Haltefolie (6) innig und dicht an die Installationsoberfläche (2) flächig anlegt, so dass auch über lange Zeit keine die Halterung aufhebende Luft zwischen die Haltefolie (6) und die Installationsoberfläche (2) gelangt, die Verbundfolie (6) jedoch von Hand von der Installationsoberfläche (2) zur Lösung der Halterung abziehbar ist.

2. Insektenfalle nach Anspruch 1, **dadurch gekennzeichnet, dass** die Verbundfolie (8) zweilagig ausgebildet ist und aus der Trägerfolie (3) und einer sich über die gesamte Trägerfläche erstreckenden Haltefolie (6) besteht.

3. Insektenfalle nach Anspruch 2, **dadurch gekennzeichnet, dass** die Verbundfolie (8) großflächig in einer Spritz-Blasform hergestellt ist, wobei zuerst die Trägerfolie (3) als Schlauch spritzbar ist, in den anschließend die Haltefolie einblasbar ist.

4. Insektenfalle nach einem der Ansprüche 1 bis 3, **dadurch gekennzeichnet, dass** die Verbindung zwischen der Haltefolie (6) und Trägerfolie (3) zumindest in Teilflächenbereichen durch Verschweißen und/oder Verkleben und/oder über ein Vakuum zwischen den Anlageflächen ausgeführt ist.

5. Insektenfalle nach einem der Ansprüche 1 bis 4, **dadurch gekennzeichnet, dass** die weiche Haltefolie (6) eine PVC-Folie (Poly-Vinyl-Chlorid-Folie) mit hohem Weichmacheranteil ist, und
dass die relativ steifere Trägerfolie (3) eine keine Weichmacher enthaltende Polyester-Folie ist.

6. Insektenfalle nach einem der Ansprüche 1 bis 5, **dadurch gekennzeichnet, dass** die Haltefolie (6), die Trägerfolie (3) und eine ggf. dazwischen liegende Klebstoffschicht (7) sowie die Aktivbeschichtung (4) transparent sind und die Installationsoberfläche eine Fläche einer Fensterscheibe (2) ist.

7. Insektenfalle nach Anspruch 6, **dadurch gekennzeichnet, dass** die freie Trägerfolienfläche mit der Aktivbeschichtung (4) für eine Bemalung mit Transparentfarben hergerichtet ist.

8. Insektenfalle nach einem der Ansprüche 1 bis 7, **dadurch gekennzeichnet, dass** auf der Trägerfolienoberfläche mit der Aktivbeschichtung (4) und/oder auf der Haftfläche der Haltefolie (6) abziehbare Schutzfolien (10, 11) angebracht sind.

9. Insektenfalle nach einem der Ansprüche 1 bis 8, **dadurch gekennzeichnet, dass** an einem in Wirkstellung unteren Kantenbereich der Verbundfolie (8) unter Ausnützung einer Formstabilität der Trägerfolie (3) eine Auffangrinne (9) gebildet ist.

10. Insektenfalle nach einem der Ansprüche 1 bis 9, **dadurch gekennzeichnet, dass** in der Verbundfolie (8) zumindest in Teilflächenbereichen unter Ausnützung einer Formstabilität der Trägerfolie (3) eine Auffangstruktur (12) gebildet ist.
